# EUROPEAN PATENT APPLICATION

(11) **EP 3 514 022 A1**
(43) Date of publication of application: **24.07.2019**
(21) Application number: 18152478.6
(22) Date of filing: 19.01.2018
(51) Int. Cl.: B60R 22/34, B60R 22/46

(54) **BELT REEL AND BELT RETRACTOR**

(71) Applicant: TRW Polska Sp.z.o.o., 42-200 Czestochowa (PL)
(72) Inventor: Suchanski, Damian, 42-231 Stary Cykarzew (PL); Krukowski, Krzysztof, 42-200 Cz stochowa (PL)
(74) Representative: ZF TRW Patentabteilung

(57) **Abstract**

A belt reel (10) for a belt retractor is provided, comprising a pinion (12) which is configured to be driven by a drive element in order to rotate the belt reel (10), and a spool (14) whereon a belt can be wound up by rotation of the belt reel (10), wherein a damping device (16) is provided between the pinion (12) and the spool (14), a torque being transmittable to the spool (14) by the pinion (12) and wherein the pinion (12) and the spool (14) are rotatably fixed with respect to each other when the torque transmitted to the spool (14) by the pinion (12) is below a threshold value and wherein a relative movement between the pinion (12) and the spool (14) is allowed due to a wedging effect being enabled by the damping device (16) when the torque transmitted to the spool (14) by the pinion (12) exceeds the threshold value. Furthermore, a belt retractor is provided, comprising a belt tensioning mechanism with a belt reel (10) and a drive mechanism being configured to rotate the belt reel (10) in order to wind up a belt, wherein the drive mechanism comprises a pyrotechnic gas generator (46) and an elongated elastic piston (32) which is configured to rotate the pinion (12) of the belt reel (10) by activation of the gas generator (46).

## Description

The invention relates to a belt reel for a belt retractor and to a belt retractor.

Belt retractors are part of the safety system of vehicles. In case of need, the belt retractor is configured to tighten the belt within a short instant by rotating a belt reel in order to keep the occupants securely restrained. This is particularly useful when thick clothing prevents a tight fit of the belt against the body. When used properly, the belt retractor will apply approximately 2 kN to the shoulder of an occupant.

For tightening of the belt, a so-called belt tensioner is used which drives, when actuated, the belt reel in the winding direction.

When activating the belt tensioner, it is important to reliably couple it to the belt reel. In a normal condition, no connection between the belt reel and the belt retractor is admissible as the belt reel could otherwise not pay out the belt or wind it up when necessary. Coupling the belt tensioner to the belt reel is critical as a connection between the actuated belt tensioner and the usually not rotating belt reel has to be established reliably. In particular, the first contact between a moving member of the belt tensioner and a standing member of belt reel is critical.

It is therefore an object of the present invention to provide an improved belt reel for a belt retractor and a belt retractor which allow reliably establishing the connection from the belt tensioner to the belt reel.

This object is achieved by a belt reel for a belt retractor, comprising a pinion which is configured to be driven by a drive element in order to rotate the belt reel, and a spool whereon a belt can be wound up by rotation of the belt reel, wherein a damping device is provided between the pinion and the spool. A torque is transmittable to the spool by the pinion, wherein the pinion and the spool are rotatably fixed with respect to each other when the torque transmitted to the spool by the pinion is below a threshold value and wherein a relative movement between the pinion and the spool is allowed due to a wedging effect being enabled by the damping device when the torque transmitted to the spool by the pinion exceeds the threshold value.

By allowing a relative movement between the pinion and the spool, the pulse can be damped which is typically being created when the drive element which is part of the belt tensioner, impinges on the pinion connected to the belt reel. Thus, mechanical stress on all components involved in the transmission of the torque from the belt tensioner to the belt reel can be reduced.

The spool and the pinion may be arranged concentric with respect to each other. The damping device may as well be arranged concentric with respect to the spool and the pinion. Thereby, the belt reel may be in balance during a rotational movement of the belt reel.

Preferably, the spool comprises a main body on which a belt can be wound up and an extended shaft on which the pinion may be mounted. As a result, the construction of the belt reel can be compact and the space requirement of the belt reel can be low.

In order to achieve the wedging effect, the damping device comprises at least one ramp. In particular, the ramp is wedge-shaped. The shape of the ramp may be adapted to the shape of the belt reel. For example, the at least one ramp is arranged at the pinion or at the spool. Preferably, the damping device comprises two or more ramps, in particular three ramps. Thereby, a reliable damping may be realised.

The curvature of at least one ramp may be variable. In particular, the ramp comprises an initial section and an end section, wherein the curvature of the ramp increases from the initial section towards the end section. Therefore, at the initial section of the ramp, a distance of a ramp surface to an axis of rotation of the belt reel may larger than that at the end section. As a result, the damping behavior of the belt reel can be influenced, namely by the rotational movement between pinion and spool being braked more strongly in the end section of the ramp than in the initial section.

In a preferred embodiment, the pinion comprises a centric opening, wherein the at least one ramp is arranged at a circumference of the opening. In particular, the at least one ramp may be configured as a recess at a circumference of the opening. Alternatively, the ramp may be arranged at an outer circumference of the spool, for example at the extended shaft of the spool. Thereby, the ramp may be an integral part of an element of the belt reel, whereby the number of separate components of the belt reel may be kept low.

In a further alternative embodiment, the damping device may comprise an additional element which comprises the ramp, for example a sleeve-shaped element which may be arranged between the pinion and the spool. For example, the sleeve-shaped element may be configured as an insert which is fixed to the pinion or to the spool. The sleeve-shaped element may comprise a different material than the pinion or the spool. Thereby the damping properties of the damping device can be affected.

In case the damping device comprises more than one ramp, the ramps may be evenly distributed around a central axis of the belt reel. This contributes to the fact that there is no unbalance during rotation of the belt reel.

Preferably, the at least one ramp extends over an angular range between 30° and 120°, in particular between 50° and 80°. By means of the angular range of the ramp, the extent of a rotational movement between the pinion and the spool may be determined.

In particular, the rotational movement between the pinion and the spool is limited to the angular range of the at least one ramp. By this means, the degree of the damping can be adjusted.

According to a preferred embodiment, the damping device comprises a plastically deformable element. The plastically deformable element may be attached to the pinion or the spool or may be an integral part of the pinion or the spool. By means of a plastically deformable element, the rotational movement between the pinion and the spool may be enabled. In particular, the plastically deformable element may ensure that the pinion and the spool are rotatably fixed with respect to each other when the torque transmitted to the spool by the pinion is below a threshold value. When the torque exceeds the threshold value, the plastically deformable element may start to deform, thereby enabling a relative movement between the pinion and the spool.

The plastically deformable element may comprise a plastic or metallic material or consist of such a material. By a suitable material selection, the damping properties of the damping device can be determined. In particular, the flow behaviour of the material plays a decisive role.

According to one embodiment, the damping device comprises a sleeve member which is fixed to the spool or the pinion in a non-rotatable manner. For this purpose, the sleeve member, the pinion or the spool may comprise protrusions which engage in corresponding recesses of the spool, the sleeve member or the pinion. The sleeve member may be configured as the plastically deformable element described above.

By means of the sleeve member, the belt reel may comprise a predetermined breaking point between the pinion and the spool. The sleeve member can thus serve as a force as a force limiting device. In particular, the sleeve member and the spool are configured to rotate with respect to each other when a torque transmitted to the spool by the pinion exceeds a certain value. This value is above the threshold value at which the pinion and the spool start to rotate with respect to each other. For example, the protrusions of the sleeve member or the spool may break when a certain value of the torque is exceeded, whereupon the pinion and the spool may rotate unimpeded with respect to each other.

In a preferred embodiment, the damping device comprises at least one projection. In particular, the number of projections corresponds to the number of ramps. For example, the projection is comprised by the plastically deformable element of the damping device, in particular by the sleeve member. Alternatively, the projection may be an integral part of the spool. The projection may be arranged at an outer circumference of the spool, in particular when the ramp is arranged at an inner circumference of the opening of the pinion. Thereby, the projections and the ramps may be engaged with each other. In an alternative embodiment, when the ramps are arranged at an outer circumference of the spool, the projections may be arranged at an inner circumference of the opening of the pinion. By means of the projections in interaction with the ramps, the pinion and the spool may be rotatably fixed with respect to each other. Additionally, by the interaction of the projections and the ramps, the wedging effect of the damping device may be achieved.

A surface of the projection may be rounded, for example the projection may comprise a semicircular profile.

In an initial state, when the pinion and the spool are rotatably fixed with respect to each other before a threshold value has been exceeded, the at least one projection of the damping device is preferably in direct contact with the initial section of the at least one ramp.

When the pinion transmits a torque to the spool, a force may be applied on the projection by the ramp due to the progressive shape of the ramp, in particular by an inclined surface of the ramp. The force applied on the projection increases with increasing torque. When the threshold value of the torque is exceeded, the projection may start to deform. Upon deformation, the projection may adapt to the shape of the ramp. This means that the projection is flattened by the ramp. As soon as a deformation of the projection takes place, the pinion and the spool may start to rotate with respect to each other, and thereby a tightening of the belt by the belt retractor is dampened.

Furthermore, the object of the present invention is achieved by a belt retractor comprising a belt tensioning mechanism with a belt reel as described, and a drive mechanism being configured to rotate the belt reel in order to wind up a belt, wherein the drive mechanism comprises a pyrotechnic gas generator and an elongated elastic piston which is configured to rotate the pinion of the belt reel by activation of the gas generator.

Further features and advantages of the invention will become apparent from the following description and from the accompanying drawings to which reference is made. In the drawings:
- Figure 1 shows a partial front view of a belt reel according to the invention,
- Figure 2 shows a cross-section through a damping device of a belt reel according to a first aspect of the invention,
- Figures 3a and 3b show the damping device of Figure 2 in a different condition,
- Figure 4 shows a detailed view of a ramp,
- Figure 5 shows cross-section through a damping device of a belt reel according to an alternative embodiment of the invention,
- Figures 6a and 6b show the damping device of Figure 5 in a different condition,
- Figure 7 shows a drive mechanism of a belt retractor and
- Figure 8 a belt retractor 50 according to the present invention.

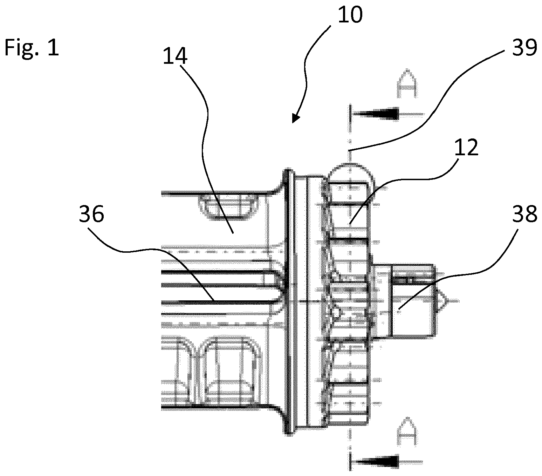

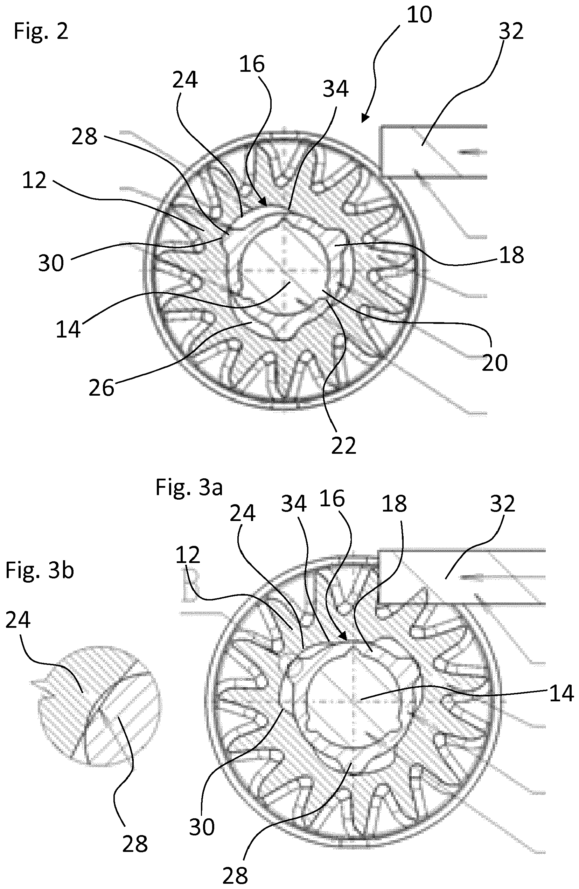

Figure 1 shows a partial front view of a belt reel 10. The belt reel 10 comprises a pinion 12 and a spool 14. The spool 14 of the belt reel 10 comprises a main body 36 on which a belt can be wound up and an extended shaft 38 around which the pinion 12 is arranged. Figures 2, 3a, 5 and 6a each show a sectional view along line 39.

Figure 2 shows a damping device 16 of a belt reel 10 for a belt retractor according to a first aspect of the present invention in a sectional view. The damping device 16 is arranged between the pinion 12 and the spool 14.

The damping device 16 comprises a sleeve member 18, which is arranged concentrically around the spool 14 and which is rotatably fixed to the spool 14 by means of protrusions 20 of the spool 14 which engage in corresponding recesses 22 of the sleeve member 18. In particular, the spool 14 has three protrusions 20 arranged circumferential around the spool 14 and offset by 120 degrees to each other. The number and size of the protrusions can be adopted according to the respective requirements. Independent from the number of protrusions they are arranged symmetrically.

The damping device 16 further comprises ramps 24, in particular three ramps 24, which are arranged evenly distributed around a circumference of a centric opening 26 of the pinion 12 and are adapted to the circular form of the pinion 12. In particular, the ramps 24 are configured as recesses in the pinion 12. In the shown embodiment, the ramps 24 extend over a range of about 60°. The curvature of the ramps 24 is variable. In particular, each ramp 24 has an initial section 30 and an end section 34, wherein the curvature of the ramp 24 increases from the initial section 30 towards the end section 34.

In an alternative embodiment, the damping device 16 may comprise an additional sleeve-shaped element (not shown) which may comprise the ramps 24 and which may be fixed to the pinion 12.

At an outer circumference of the sleeve member 18, three projections 28 are arranged, which are offset by 120 degrees to each other. Each of the projections 28 is in contact with a surface of one ramp 24, in particular each projection 28 is arranged at an initial section 30 of the curved surface of a ramp 24. Thereby, the pinion 12 and the spool 14 are rotatably fixed with respect to each other. The projections 28 have a semicircular profile.

In order to achieve a damping effect, the projections 28 are formed from a plastically deformable material, for example a plastic material or a metallic material. For example, the whole sleeve member 18 consists of a plastically deformable material.

The pinion 12 is configured to be driven by an elongated piston 32 of a drive element. In Figure 2, the belt reel 10 is shown in a condition before a rotation took place.

The mode of operation of the mechanism will be described in more detail below.

In the initial state, the belt reel 10 is in a condition as shown in Figure 2, with each projection 28 being located at an initial section 30 of one ramp 24. When the pinion 12 is rotated by the drive mechanism, the projections 28 are pressed against the inclined surface of the ramp 24.

Thereby, upon rotation of the pinion 12, a force is applied on the projections 28 due to the curved surface of the ramps 24. When the torque transmitted to the spool 14 by the pinion 12 exceeds a threshold value, the pressure on the projections 28 increases such that the projections 28 are plastically deformed, in particular flattened by the ramps 24. By this means, a rotational movement between the pinion 12 and the sleeve member 18, respectively between the pinion 12 and the spool 14, is enabled. Thus, the rotational movement of the spool 14 is dampened.

In particular, the piston 32 hits the pinion 12 at high speed, which would lead to mechanical stress on the pinion and the belt reel unless the damping device 16 would dampen the rotation of the belt reel.

In Figure 3a, the belt reel 10 is shown in a condition during a rotation of the pinion 12. In particular, the piston 32 has started to rotate the pinion 12 which rotates the spool 14, and the projections 28 are already partially deformed.

Figure 3b shows an enlarged section of a projection 28 being in contact with a ramp 24. In the section, the ramp 24 and the projection 28 collide with each other, yet, in reality the projection 28 is deformed by the ramp 24.

From a certain point, the projection 28 cannot be deformed any further. This is when the projection 28 has reached the end section 34 of the ramp 24, because in that condition there is no space left to which the material of the projection 28 can be displaced. In particular, the pinion 12 and the spool 14 are wedged to each other. Consequently, the damping effect has ceased.

When a torque applied to the spool 14 becomes too great, for example when an occupant is pressed against the belt, the protrusions 20 may break, thereby enabling an unimpeded relative rotation between the pinion 12 and the spool 14.

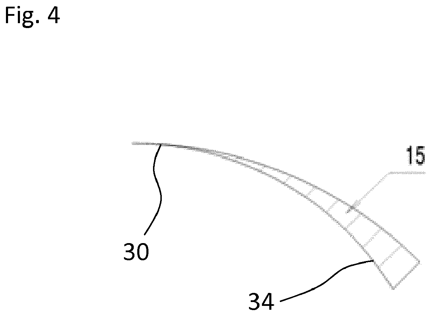

Figure 4 shows the shape of the ramp 24 in a sectional view. As already described, the ramp 24 has a curved, in particular progressive shape with an initial section 30 and an end section 34.

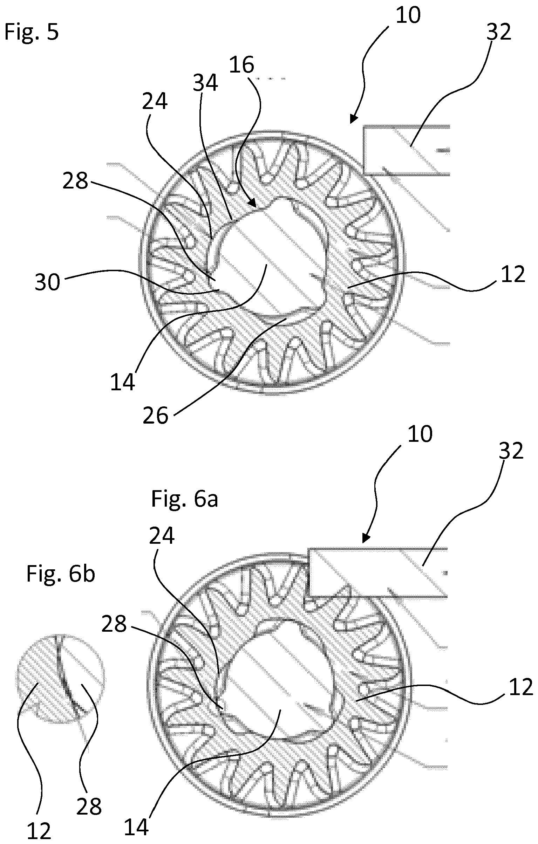

Figures 5, 6a and 6b show a damping device 16 of a belt reel 10 according to an alternative embodiment of the invention. The belt reel according to Figures 5, 6a and 6b is similar to the embodiment according to Figures 2, 3a and 3b, apart from that the damping device 16 does not comprise a sleeve member.

In the shown embodiment, the projections 28 are integrated in the spool 14. In particular, the projections 28 are evenly distributed at a circumference of the extended shaft of spool 14.

Apart from that, the working mechanism is the same as described in accordance with Figures 2, 3a and 3b.

The advantage of this embodiment is that the damping device 16 is completely integrated in other required parts of the belt reel 10, namely the pinion 12 and the spool 14. Thereby, the number of components of the belt reel 10 may be kept low and the belt reel 10 can be cost-effectively manufacturable.

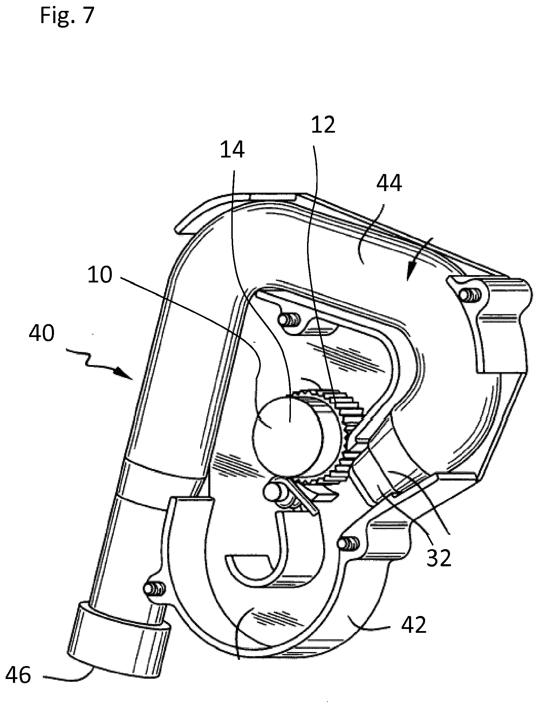

Figure 7 shows an exemplary drive mechanism 40 of a belt retractor according to the present invention comprising a belt tensioning mechanism with a belt reel 10 as described in the preceding figures. The drive mechanism 40 comprises a housing 42 in which the belt reel 10 is rotatably mounted. Furthermore, the drive mechanism 40 comprises a chamber 44 which has the shape of a bent pipe.

The chamber 44 accommodates the elongated piston 32 and a pyrotechnic gas generator 46. The piston 32 is flexible, in particular made of an elastomeric material. For example, the piston 32 may have a quadratic or circular profile.

When the drive mechanism 40 is activated, in particular when the gas generator 46 is operated, a pressure gas fills the chamber 44. This results in a high overpressure in the chamber 44. The overpressure may comprise 700bar. Thereby, a force is applied on the piston 32, whereby the piston 32 is pulled out of the chamber 44. The amount of the force corresponds to a difference between the internal pressure and the external pressure multiplied by the cross-sectional area of the piston 32.

When moving out of the chamber 44, the piston 32 engages the pinion 12 and thus causes the belt reel 10 to rotate. Thereby, a belt tightening takes place under the influence of the above-described damping device 16.

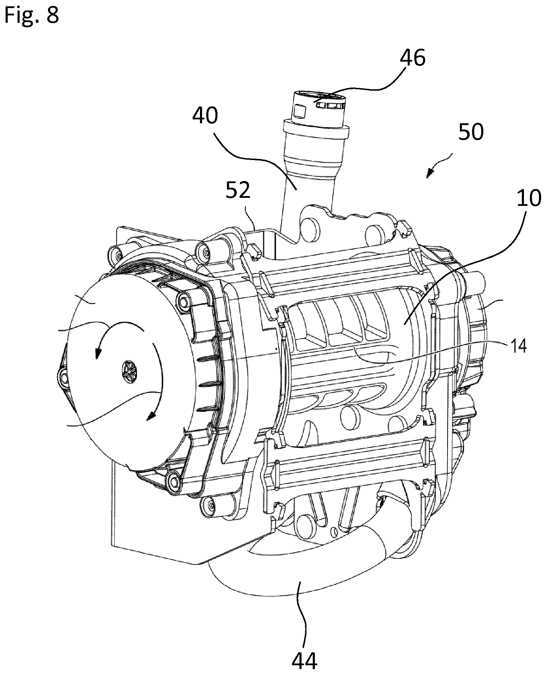

Figure 8 shows a belt retractor 50 according to the present invention, with a belt reel 10 as described in accordance with Figures 2 to 6, and a drive mechanism 40. The belt reel 10 is rotatably mounted in a frame 52.

## Claims

1. Belt reel (10) for a belt retractor, comprising a pinion (12) which is configured to be driven by a drive element in order to rotate the belt reel (10), and a spool (14) whereon a belt can be wound up by rotation of the belt reel (10), wherein a damping device (16) is provided between the pinion (12) and the spool (14), a torque being transmittable to the spool (14) by the pinion (12) and wherein the pinion (12) and the spool (14) are rotatably fixed with respect to each other when the torque transmitted to the spool (14) by the pinion (12) is below a threshold value and wherein a relative movement between the pinion (12) and the spool (14) is allowed due to a wedging effect being enabled by the damping device (16) when the torque transmitted to the spool (14) by the pinion (12) exceeds the threshold value.

2. Belt reel (10) according to claim 1, wherein the damping device (16) comprises at least one ramp (24).

3. Belt reel (10) according to claim 2, wherein a curvature of the at least one ramp (24) is variable.

4. Belt reel (10) according to any of claims 2 or 3, wherein the pinion (12) comprises a centric opening (26), wherein the at least one ramp (24) is arranged at a circumference of the opening (26).

5. Belt reel (10) according to any of claims 2 to 4, wherein the at least one ramp (24) extends over an angular range between 30° and 120°, in particular between 50° and 80°.

6. Belt reel (10) according to claim 5, wherein the rotational movement between the pinion (12) and the spool (14) is limited to the angular range of the at least one ramp (24).

7. Belt reel (10) according to any of the preceding claims, wherein the damping device (16) comprises a plastically deformable element.

8. Belt reel (10) according to any of the preceding claims, wherein the plastically deformable element comprises a plastic or metallic material.

9. Belt reel (10) according to any of the preceding claims, wherein the damping device (16) comprises a sleeve member (18) which is fixed to the spool (14) in a non-rotatable manner.

10. Belt reel (10) according to claim 9, wherein sleeve member (18) and the spool (14) are configured to rotate with respect to each other when a torque transmitted to the spool (14) by the pinion (12) exceeds a certain value.

11. Belt reel (10) according to any of the preceding claims, wherein the damping device (16) comprises at least one projection (28).

12. Belt reel (10) according to claim 11, wherein the at least one projection (28) is arranged at the sleeve member (18) or at the spool (14) or at the pinion (12).

13. Belt reel (10) according to claim 11 or 12, wherein the at least one projection (28) of the damping device (16) is in direct contact with an initial section (30) of the at least one ramp (24).

14. Belt retractor (50) comprising a belt tensioning mechanism with a belt reel (10) according to claims 1 to 13 and a drive mechanism (40) being configured to rotate the belt reel (10) in order to wind up a belt, wherein the drive mechanism (40) comprises a pyrotechnic gas generator (46) and an elongated elastic piston (32) which is configured to rotate the pinion (12) of the belt reel (10) by activation of the gas generator (46).
